# EUROPEAN PATENT SPECIFICATION

(11) **EP 3 924 140 B1**
(45) Date of publication and mention of the grant of the patent: **27.09.2023**
(21) Application number: 20755215.9
(22) Date of filing: 11.02.2020
(51) Int. Cl.: B23K 37/02, B23Q 1/25, B25H 1/10

(54) **A WEIGHT BALANCING GANTRY**
GANTRY MIT GEWICHTSAUSGLEICH
PORTIQUE D'ÉQUILIBRAGE DE POIDS

(30) Priority: 11.02.2019 AU 2019900436
(43) Date of publication of application: 22.12.2021
(73) Proprietor: Cuschieri, Clem, Beverly Hills NSW 2209 (AU)
(72) Inventor: Cuschieri, Clem, Beverly Hills NSW 2209 (AU)
(74) Representative: Vesterinen, Jussi Tapio
(86) International application number: PCT/AU2020/050108
(87) International publication number: WO 2020/163903

(56) References cited:
- DE-A1- 2 640 447
- DE-A1- 4 017 532
- DE-A1- 19 623 265
- DE-A1- 19 902 206
- DE-B- 1 150 789
- DE-B- 1 301 974
- DE-U1- 9 005 779
- DE-U1- 29 521 235
- DE-U1- 29 521 235
- JP-A- 2015 188 941
- US-A- 2 176 979
- US-A- 2 176 979
- US-A- 5 509 638
- US-A- 6 087 611
- US-A1- 2013 146 732

## Description

### Field of the Invention

This invention relates generally to a type of weight balancing gantry for balancing industrial tools, such as spot-welding guns.

### Background of the Invention

Weight balancing gantries are used in industry to vertically balance the weight of industrial tools, such as spot-welding guns in the car repair industry. The weight of these tools can range from 10-25kgs depending on arm size used, making them heavy and awkward to use without the assistance of a weight balancing gantry.

US 2176979 A (Platz) 24 October 1939 discloses a typical weight balancing gantry arrangement comprising a horizontal radial arm supported from a tower. A bogey runs along the horizontal radial arm and has pneumatic counterbalancing mechanism thereon from which a spot-welding gun is vertically balanced from a cable.

US 6087611 A (De Bruyn et al.) discloses a system for vertically balancing welding tongs which comprises a spring balance attached from a horizontal radial arm for supporting the welding tongs from a cable. In a similar manner as that taught by Platz, the spring balance can run along the horizontal radial arm to various horizontal positions.

However, when welding within the beaver panel (section under the boot lid and boot floor) of a vehicle for example, the cable may be obstructed by the boot lid. Furthermore, the height of the roof of the vehicle may be too high for the radial arm. JP2015188941A shows the preamble of claim 1. Other balancing devices are shown in DE19902206A1, DE1301974B, DE4017532A1, DE2640447A1, US2176979A and DE29521235U1.

As such, a need exists for an improved weight balancing gantry which will overcome or substantially ameliorate at least some of the deficiencies of the prior art, or to at least provide an alternative.

It is to be understood that, if any prior art information is referred to herein, such reference does not constitute an admission that the information forms part of the common general knowledge in the art, in Australia or any other country.

### Summary of the Disclosure

There is provided herein a weight balancing gantry according to claim 1.

The gantry may be supported from an industrial cart and the gantry supports an associated industrial tool from the radial arm. The industrial cart may be a mobile spot welder and the industrial tool may be a spot-welding gun.

The gantry further comprises a weight balancing mechanism which may comprise pneumatically biased opposing pulleys.

Furthermore, the gantry comprises a positioning mechanism at the radial arm comprising at least one controlled cylinder for positioning and holding the bogey along the radial arm.

The cable is run from the weight balancing mechanism, up across the pivot point pulley and over the bogey pulley to attach to the industrial tool for the balancing thereof.

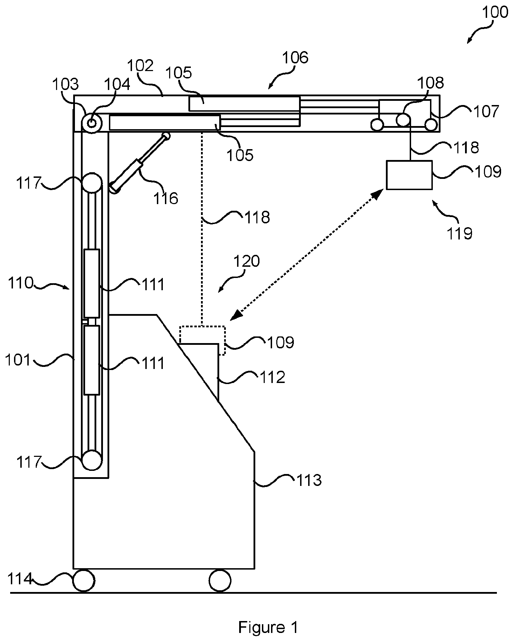

The length of the cable is determined such that, in the manner shown in Figure 1, when the positioning mechanism is retracted, the length of cable between the bogey pulley and the industrial tool is lengthened so as to position the industrial tool at a lower proximal stowed position. The industrial cart may comprise a toolholder such that, when the industrial tool is at the lower proximal stowed position, the industrial tool can be easily be placed in the holder.

However, when the positioning mechanism is extended, the length of cable between the bogey pulley and the industrial tool shortens to move the industrial tool to a distal raised deployed position.

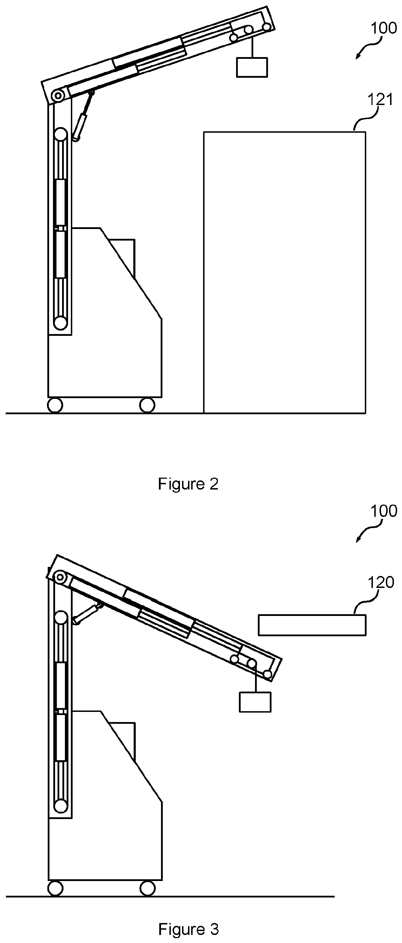

In the manner shown in Figure 2, the radial arm can be raised by the angle strut to hoist the industrial tool over a high obstacle, such as a vehicle roof. When the radial arm is inclined at an angle in this way, the at least one cylinder of the positioning mechanism holds the bogey in place along the radial arm and prevents the bogey from running down the radial arm.

In the manner shown in Figure 3, the radial arm may be lowered, and the bogey positioned at a distal end of the arm to reach under an overhanging obstacle such as vehicle boot when working on the beaver panel for example.

Furthermore, the fixed length radial arm having the bogey travelling therealong, simplifies the construction of the radial arm and increases the resilience and weight bearing structural integrity thereof.

The weight balancing mechanism may comprise collinear cylinders to reduce the width of the tower.

Furthermore, the positioning mechanism may comprise two cylinders acting in series wherein a piston rod of a proximal cylinder of the positioning mechanism is connected to the cylinder tube of a distal cylinder of the positioning mechanism so that the bogey can be brought close to the tower, such as, for example, for placing the spot welder in a holder of the industrial cart.

Other aspects of the invention are also disclosed.

### Brief Description of the Drawings

Notwithstanding any other forms which may fall within the scope of the present invention, preferred embodiments of the disclosure will now be described, by way of example only, with reference to the accompanying drawings in which:
Figure 1 shows a weight balancing gantry in accordance with an embodiment;
Figure 2 illustrates the raising of a radial arm of the gantry to reach over high objects; and
Figure 3 illustrates the lowering of the radial arm of the gantry to reach under objects.

### Description of Embodiments

A weight balancing gantry 100 comprises a tower 101 having a radial arm 102 pivotally coupled from a pivot point 104 at an upper end of the tower 101 for supporting an industrial tool 109 such as a spot-welding gun.

The gantry 101 may be supported from an industrial cart 113 having castor wheels 114, such as a mobile spot welder.

An angle strut 116 acts between the tower 101 and the radial arm 102 across the pivot point 104.

In embodiments, the radial arm 102 may further swing side to side.

The gantry 100 comprises a weight balancing mechanism 110 which may comprise counteracting weight balancing pulleys 117. Each pulley 117 may be pneumatically biased from respective pneumatic cylinders 111, preferably in-line in the manner shown in Figure 1 to reduce the overall width of the tower 101. In the embodiment shown, the weight balancing mechanism 110 is concealed within the tower 101.

In an embodiment, the balancing mechanism 110 may comprise a cheaper spring balancer as opposed to the pneumatic balancing cylinders.

A bogey 107 runs along the radial arm 102 between proximal and distal positions and supports a bogey pulley 108. The bogey 107 may run within an interior of the radial arm 102 in embodiments. A pivot point pulley 103 is located between the tower 101 and the radial arm 102, preferably coaxial with the pivot point 104.

The positioning mechanism 106 may comprise at least one controlled cylinder 105 which acts between the radial arm 102 and the bogey 107 to position and hold the bogey 107 at various positions along the radial arm 102.

The at least one cylinder 105 may be a pneumatic cylinder but, in alternative embodiments, may be hydraulic for increased positional stability, especially when the radial arm 102 is at an angle.

As spot welder guns already have an air supply (to allow the electrodes in the gun to squeeze the metals therefrom for welding), the air supply may be routed to the at least one cylinder of the positioning mechanism 106 by an offtake. As such, when the industrial tool is activated, the positioning mechanism automatically extends. A one-way valve may interface the offtake such that, should the air supply the accidentally disconnected, the positioning mechanism 106 remained extended.

A pneumatic toggle switch may allow forward and backward control of the at least one cylinder 105 of the positioning mechanism 106. When the toggle switch is opened, the cylinders 105 extend and are held extended by a pressure against gravity and cable tension.

Typically however, the toggle switch may only allow positioning between fully extended and fully retracted positions and, as such, in an embodiment, a control solenoid may be employed for inching control can be achieved should cylinder positioning be required.

A cable 118 may be run from between the cylinders 111 of the balancing mechanism 110, over the upper weight balancing pulley 117, down round the lower weight balancing pulley 117, up across the pivot point pulley 103, across to the bogey pulley 108 and down to support the industrial tool 109 at a distal end thereof.

In the embodiment shown, a pair of cylinders 105 act in series along the radial arm 102. In embodiments shown, the piston rod of the proximal cylinder 105 is connected to the cylinder tube of the distal cylinder 105 such that the cylinders 105 can assume contracted length substantially equal to that of one of the cylinder tubes, especially helpful when positioning the tool 109 into a toolholder on the cart 113.

With reference to Figure 1, the length of cable 118 is determined such that, when the cylinders 105 of the positioning mechanism 106 are retracted, the length of cable 118 between the bogey pulley 108 and the industrial tool 109 is lengthened so as to hold the tool 109 at a lower proximal stowed position 120. However, when the cylinders 105 of the positioning mechanism 106 are extended, the length of cable 118 between the bogey pulley 108 and the industrial tool 109 shortens so as to hold the tool 109 at an upper distal position 119 at the end of the radial arm 102 ready for use.

In embodiments, the cart 130 may comprise a toolholder 112 which corresponds generally with the lower proximal stowed position 120. As such, when the positioning mechanism 106 is retracted, the industrial tool 109 may be easily placed within the toolholder 112.

In an embodiment (not shown) the tower 101 may be extendable in comprising a height adjustment mechanism comprising a cylinder 112 acting between a base piece 113 and an upper moveable telescopic piece. The height adjustment mechanism may be used in conjunction was alternative to the pivoting radial arm 102 wherein, for the latter, the radial arm 102 can be fixed at a right angle and height can be adjusted using the height adjustment mechanism. The height adjustment mechanism may be controlled by a linear actuator as opposed to a cylinder for torque and lock enhancement. Similarly, the linear actuator may be used for the angle strut 116 as opposed to a cylinder for enhanced angle control and lockability.

Where the angle strut 116 comprises a gas strut, the angle strut 116 may be lockable for holding the radial arm 102 in place at a certain height.

In embodiments angle strut 116 may comprise remotely controlled pneumatic cylinder, preferably controlled from the industrial tool 109.

The gantry 100 may comprise controllers accessible at the industrial tool 109 (wired or wireless) to control actuators for the angle strut 116 and positioning mechanism 106.

Furthermore, pressure within a pressure tank operably coupled to the pneumatic cylinder 111 of the weight balancing mechanism 110 may be adjusted (either manually or using an actuator) to match the weight of the industrial tool 109.

A separate supply from the same air supply source may be connected to the balancing cylinders 111 and finally to the pressure tank from a one-way valve and an air adjusting valve for adjusting tension the tension of the cable 118.

As such, in the manner shown in Figure 2, the radial arm 102 may be raised by controlling the angle strut 116 to avoid an elevated obstacle 121. The cylinders 105 of the positioning mechanism 106 hold the bogey 107 in place along the radial arm, preventing the bogey 107 from sliding down the radial arm 107.

In the manner shown in Figure 2, the radial arm 102 may be raised to reach over high obstacles 121 and lowered in the manner shown in Figure 3 to reach under overhanging obstacles 120.

In embodiments, where the angle strut 116 comprises a gas strut, the angle strut expands at the force rating thereof. A spring-loaded pin in the strut 116 may be pushed by a pivoting lever handle to lock the strut 116 at different positions. When the lever is pulled, the strut 116 may be released up to the maximum stroke thereof. A handle of the lever may be at one end of the strut 116 mounted on a bracket on the tower and the handle may be pushed and held in a downward position to release the lock to allow movement of the arm 102 in either direction then released to hold it at the desired angle.

The force rating of the strut 116 may be such that when the tool 109 is at the proximal position 120, the force rating may be sufficient to raise the radial arm to the maximum angle thereof when the strut 116 is unlocked. Conversely, when the tool 109 is at the distal position 119, the force rating may be insufficient such that the radial arm 102 lowers.

As such, the raising and lowering of the radial arm 102 may be controlled by the position of the bogey 107.

When raising the radial arm 102, the positioning mechanism 106 may be retracted and the tool 109 placed in the holder 112 where after the strut 116 may be unlocked to raise the radial arm 102.

However, as the length of cable 118 may position the tool 109 beneath the holder 112 because the radial arm 102 is lowered and thereby requiring the operator to lift the tool, as an alternative, to allow support of the weight of the tool 109 all the way to the holder 112, the operator may push the radial arm 102 up at the same time while retracting the positioning cylinders such that, when the tool 109 reaches the holder 112, the radial arm 102 will already be at the highest position thereof.

As the lever to unlock the strut 116 may be spring loaded (i.e., in that the handle thereof needs to be held down to unlock the strut 116), it may be difficult to hold the tool 109 up and the lever down simultaneously, especially when the operator is at the distal end away from the lever.

As such, the mechanism to unlock the strut 116 may be modified to hold the strut 116 unlocked wherein the handle may be pushed down and then inward to be held in place. The radial arm 102 can now be automatically raised from is lower position by the force of the strut 116 while it is unlocked by simply retracting the positioning cylinders, shifting the weight of the tool 109 back toward the pivotal end, completely supporting the weight of the tool 109 all the way to the holder. The operator then pulls the lever outward to then relock the strut 116.

If a remotely controlled pneumatic cylinder (coupled with a standard gas strut for assistance) is used for the angle strut 116 the height of the radial arm 102 may be adjusted when the tool 109 is at the distal end of the radial arm 102.

The foregoing description, for purposes of explanation, used specific nomenclature to provide a thorough understanding of the invention. However, it will be apparent to one skilled in the art that specific details are not required in order to practise the invention. Thus, the foregoing descriptions of specific embodiments of the invention are presented for purposes of illustration and description. They are not intended to be exhaustive or to limit the invention to the precise forms disclosed as obviously many modifications and variations are possible in view of the above teachings. The embodiments were chosen and described in order to best explain the principles of the invention and its practical applications. The invention is defined by the following claims.

The term "approximately" or similar as used herein should be construed as being within 10% of the value stated unless otherwise indicated.

## Claims

1. A weight balancing gantry (100) comprising a tower (101) having a fixed length radial arm (102) pivotally coupled from a pivot point at an upper end of the tower, an angle strut (116) acting between the tower (101) and the radial arm (102) across the pivot point, a pivot point pulley (103) located at the upper end, a weight balancing mechanism (110) located at the tower, **characterized in that** a bogey (107) running along the radial arm, the bogey comprising a bogey pulley (108), a positioning mechanism (106) at the radial arm comprising at least one controlled cylinder (105) for positioning and holding the bogey along the radial arm and a cable (118) running from the weight balancing mechanism, up across the pivot point pulley and over the bogey pulley to attach to an industrial tool (109), and wherein the length of the cable is determined such that when the positioning mechanism is retracted, the length of cable between the bogey pulley and the industrial tool lengthens so as to position the industrial tool at a lower proximal stowed position and, when the positioning mechanism is extended, the length of cable between the bogey pulley and the industrial tool shortens to move the industrial tool to a distal raised deployed position.

2. The weight balancing gantry as claimed in claim 1, wherein the tower is supported from an industrial cart (113) and wherein the industrial cart comprises a toolholder that coincides substantially with the lower proximal stowed position such that the industrial tool can be easily be placed in the holder.

3. The weight balancing gantry as claimed in claim 1, wherein an air supply for the industrial tool is routed to the at least one controlled cylinder (105) of the positioning mechanism (106) by an offtake such that when the industrial tool is activated with the air supply, the at least one controlled cylinder automatically extends the positioning mechanism.

4. The weight balancing gantry as claimed in claim 3, further comprising a one-way valve interfacing the offtake and the control cylinder such that, should the air supply be accidentally disconnected in use, the positioning mechanism (110) remains extended and wherein the weight balancing gantry further comprises a pneumatic toggle switch interfacing the air supply and the at least one control cylinder of the positioning mechanism such that, when the toggle switch is opened, the cylinders extend and are held extended by a pressure against gravity and cable tension.

5. The weight balancing gantry as claimed in claim 3, further comprising a controlled solenoid interfacing a valve between the supply and the at least one control cylinder (105) of the positioning mechanism for positioning the bogey at various positions along the length of the radial arm.

6. The weight balancing gantry as claimed in claim 1, wherein the weight balancing mechanism comprises counteracting weight balancing pulleys.

7. The weight balancing gantry as claimed in claim 6, wherein the weight balancing pulleys are pneumatically biased from distal ends of respective pneumatic cylinders (111).

8. The weight balancing gantry as claimed in claim 7, further comprising a pressurised tank operably coupled to the pneumatic cylinders (111) and wherein the gantry further comprises a pressure control mechanism to control the pressure of the pressurised tank according to the weight of the industrial tool.

9. The weight balancing gantry as claimed 1, wherein the angle strut (116) comprises a gas strut and wherein a force rating of the gas strut is such that, when the tool is at the proximal position, the gas strut is able to raise the radial arm and wherein a force rating of the gas strut is such that, when the tool is at the distal position, the gas strut is unable to hold up the radial arm up.

10. The weight balancing gantry as claimed in claim 9, wherein the pneumatic cylinder (111) of the angle strut is controlled and wherein the pneumatic cylinder is controlled from a controller accessible at the industrial tool.

11. The weight balancing gantry as claimed in claim 1, wherein the positioning mechanism (110) comprises two hydraulic cylinders acting in series between the radial arm and the bogey.

12. The weight balancing gantry as claimed in claim 11, wherein a piston rod of a proximal cylinder of the positioning mechanism is connected to the cylinder tube of a distal cylinder of the positioning mechanism.

13. A method of controlling the weight balancing gantry (100) as claimed in claim 1, the method comprising retracting the positioning mechanism (110) to position the industrial tool (109) at the lower proximal stowed position and extending the positioning mechanism to position the industrial tool at a distal raised deployed position.

14. A method of controlling the weight balancing gantry as claimed in claim 13, further comprising using the angle strut to raise the radial arm to hold the industrial tool over an elevated obstacle and to lower the radial arm to hold the industrial tool under an overhanging obstacle.

15. The method of controlling the weight balancing gantry as claimed in claim 14, wherein the angle strut comprises a gas strut having a force rating sufficient to raise the radial arm when the tool is at the proximal position and insufficient to hold the radial arm up when the tool is at the distal position and wherein the method further comprises raising and lowering the radial arm by controlling the position of the bogey.

## Patentansprüche

1. Gewichtsausgleichsportal (100), umfassend einen Turm (101) mit einem Radialarm (102) fester Länge, der schwenkbar von einem Drehpunkt an einem oberen Ende des Turms gekoppelt ist, eine Winkelstrebe (116), die zwischen dem Turm (101) und dem Radialarm (102) über den Drehpunkt wirkt, eine Drehpunktrolle (103) am oberen Ende, einen Gewichtsausgleichsmechanismus (110) am Turm, **gekennzeichnet durch** ein entlang des Radialarms verlaufendes Drehgestell (107), wobei das Drehgestell eine Drehgestellrolle (108) umfasst, ein Positionierungsmechanismus (106) am Radialarm, der mindestens einen gesteuerten Zylinder (105) zum Positionieren und Halten des Drehgestells entlang des Radialarms umfasst, und ein Kabel (118), das vom Gewichtsausgleichsmechanismus nach oben über die Drehpunktrolle und über die Drehgestellrolle verläuft, um an einem Industriewerkzeug (109) befestigt zu werden, und wobei die Länge des Kabels so bestimmt ist, dass sich die Länge des Kabels zwischen der Drehgestellrolle und dem Industriewerkzeug beim Einfahren des Positionierungsmechanismus verlängert, um das Industriewerkzeug in einer tieferen proximalen Verstauposition zu positionieren, und wenn der Positionierungsmechanismus ausgefahren wird, die Länge des Kabels zwischen der Drehgestellrolle und dem Industriewerkzeug kürzer wird, um das Industriewerkzeug in eine distale angehobene Einsatzposition zu bewegen.

2. Gewichtsausgleichsportal nach Anspruch 1, wobei der Turm von einem Industriewagen (113) getragen wird und wobei der Industriewagen einen Werkzeughalter umfasst, der im Wesentlichen mit der unteren proximalen Verstauposition übereinstimmt, so dass das Industriewerkzeug leicht in den Halter gelegt werden kann.

3. Das Gewichtsausgleichsportal nach Anspruch 1, wobei eine Luftzufuhr für das Industriewerkzeug über einen Abzweig zu dem mindestens einen gesteuerten Zylinder (105) des Positionierungsmechanismus (106) geleitet wird, so dass, wenn das Industriewerkzeug mit der Luftzufuhr aktiviert wird, der mindestens eine gesteuerte Zylinder den Positionierungsmechanismus automatisch ausfährt.

4. Das Gewichtsausgleichsportal nach Anspruch 3, das außerdem ein Einwegventil umfasst, das den Abzweig und den Steuerzylinder so miteinander verbindet, dass der Positionierungsmechanismus (110) ausgefahren bleibt, sollte die Luftzufuhr während des Betriebs versehentlich unterbrochen werden, und wobei das Gewichtsausgleichsportal außerdem einen pneumatischen Kippschalter umfasst, der die Luftzufuhr und den mindestens einen Steuerzylinder des Positionierungsmechanismus so miteinander verbindet, dass beim Öffnen des Kippschalters die Zylinder ausgefahren werden und durch einen Druck gegen die Schwerkraft und die Kabelspannung ausgefahren gehalten werden.

5. Das Gewichtsausgleichsportal nach Anspruch 3, das außerdem ein gesteuertes Solenoid umfasst, das ein Ventil zwischen der Zufuhr und dem mindestens einen Steuerzylinder (105) des Positionierungsmechanismus verbindet, um das Drehgestell an verschiedenen Positionen entlang der Länge des Radialarms zu positionieren.

6. Gewichtsausgleichsportal nach Anspruch 1, wobei der Gewichtsausgleichsmechanismus gegenläufige Gewichtsausgleichsrollen umfasst.

7. Gewichtsausgleichsportal nach Anspruch 6, wobei die Gewichtsausgleichsrollen pneumatisch von distalen Enden jeweiliger Pneumatikzylinder (111) vorgespannt werden.

8. Gewichtsausgleichsportal nach Anspruch 7, das außerdem einen Drucktank umfasst, der betriebsmäßig mit den Pneumatikzylindern (111) verbunden ist, und wobei das Portal außerdem einen Drucksteuermechanismus umfasst, um den Druck des Drucktanks entsprechend dem Gewicht des Industriewerkzeugs zu steuern.

9. Gewichtsausgleichsportal nach Anspruch 1, wobei die Winkelstrebe (116) eine Gasstrebe umfasst, und wobei die Kraft der Gasstrebe so ausgelegt ist, dass die Gasstrebe in der Lage ist, den radialen Arm anzuheben, wenn sich das Werkzeug in der proximalen Position befindet, und wobei die Kraft der Gasstrebe so ausgelegt ist, dass die Gasstrebe nicht in der Lage ist, den Radialarm hochzuhalten, wenn sich das Werkzeug in der distalen Position befindet.

10. Gewichtsausgleichsportal nach Anspruch 9, wobei der Pneumatikzylinder (111) der Winkelstrebe gesteuert wird, und wobei der Pneumatikzylinder von einer am Industriewerkzeug zugänglichen Steuerung gesteuert wird.

11. Gewichtsausgleichsportal nach Anspruch 1, wobei der Positionierungsmechanismus (111) zwei hydraulische Zylinder umfasst, die in Reihe zwischen dem radialen Arm und dem Drehgestell wirken.

12. Gewichtsausgleichsportal nach Anspruch 11, wobei eine Kolbenstange eines proximalen Zylinders des Positionierungsmechanismus mit dem Zylinderrohr eines distalen Zylinders des Positionierungsmechanismus verbunden ist.

13. Verfahren zur Steuerung des Gewichtsausgleichsportals (100) nach Anspruch 1, wobei das Verfahren das Zurückziehen des Positionierungsmechanismus (110) umfasst, um das Industriewerkzeug (109) in der tieferen proximalen Verstauposition zu positionieren, und das Ausfahren des Positionierungsmechanismus umfasst, um das Industriewerkzeug in einer distalen angehobenen Einsatzposition zu positionieren.

14. Verfahren zur Steuerung des Gewichtsausgleichsportals nach Anspruch 13, das außerdem die Verwendung der Winkelstrebe umfasst, um den Radialarm anzuheben, um das Industriewerkzeug über einem erhöhten Hindernis zu halten, und um den Radialarm abzusenken, um das Industriewerkzeug unter einem überhängenden Hindernis zu halten.

15. Verfahren zur Steuerung des Gewichtsausgleichsportals nach Anspruch 14, wobei die Winkelstrebe eine Gasstrebe umfasst, deren Kraftwert ausreicht, um den Radialarm anzuheben, wenn sich das Werkzeug in der proximalen Position befindet, und nicht ausreicht, um den Radialarm hochzuhalten, wenn sich das Werkzeug in der distalen Position befindet, und wobei das Verfahren außerdem das Anheben und Absenken des Radialarms durch Steuern der Position des Drehgestells umfasst.

## Revendications

1. Portique d'équilibrage de poids (100) comprenant une tour (101) ayant un bras radial (102) de longueur fixe couplé de manière pivotante à partir d'un point de pivot à une extrémité supérieure de la tour, une entretoise angulaire (116) agissant entre la tour (101) et le bras radial (102) à travers le point de pivot, une poulie de point de pivot (103) située à l'extrémité supérieure, un mécanisme d'équilibrage de poids (110) situé au niveau de la tour, **caractérisé en ce que** un bogie (107) courant le long du bras radial, le bogie comprenant une poulie de bogie (108), un mécanisme de positionnement (106) au niveau du bras radial comprenant au moins un cylindre commandé (105) pour positionner et maintenir le bogie le long du bras radial et un câble (118) s'étendant depuis le mécanisme d'équilibrage de poids, jusqu'à travers la poulie de point de pivot et au-dessus de la poulie de bogie pour se fixer à un outil industriel (109), et dans lequel la longueur du câble est déterminée de sorte que lorsque le mécanisme de positionnement est rétracté, la longueur de câble entre la poulie de bogie et l'outil industriel s'allonge de manière à positionner l'outil industriel à une position de rangement proximale inférieure et, lorsque le mécanisme de positionnement est étendu, la longueur de câble entre la poulie de bogie et l'outil industriel se raccourcit pour déplacer l'outil industriel vers une position déployée relevée distale.

2. Portique d'équilibrage de poids selon la revendication 1, dans lequel la tour est supportée par un chariot industriel (113) et dans lequel le chariot industriel comprend un porte-outil qui coïncide sensiblement avec la position de rangement proximale inférieure de sorte que l'outil industriel peut être facilement placé dans le porte-outil.

3. Portique d'équilibrage de poids selon la revendication 1, dans lequel une alimentation en air pour l'outil industriel est acheminée vers le au moins un cylindre commandé (105) du mécanisme de positionnement (106) par un écoulement de sorte que lorsque l'outil industriel est activé avec l'alimentation en air, le au moins un cylindre commandé étend automatiquement le mécanisme de positionnement.

4. Portique d'équilibrage de poids selon la revendication 3, comprenant en outre une valve unidirectionnelle reliant l'écoulement et le cylindre de commande de sorte que, si l'alimentation en air est accidentellement déconnectée en cours d'utilisation, le mécanisme de positionnement (110) reste étendu, et dans lequel le portique d'équilibrage de poids comprend en outre un interrupteur pneumatique à bascule interfaçant l'alimentation en air et le au moins un cylindre de commande du mécanisme de positionnement de sorte que, lorsque l'interrupteur à bascule est ouvert, les cylindres s'étendent et sont maintenus étendus par une pression contre la gravité et la tension du câble.

5. Portique d'équilibrage de poids selon la revendication 3, comprenant en outre un solénoïde commandé interfaçant une vanne entre l'alimentation et le au moins un cylindre de commande (105) du mécanisme de positionnement pour positionner le bogie à diverses positions le long de la longueur du bras radial.

6. Portique d'équilibrage de poids selon la revendication 1, dans lequel le mécanisme d'équilibrage de poids comprend des poulies d'équilibrage de poids antagonistes.

7. Portique d'équilibrage de poids selon la revendication 6, dans lequel les poulies d'équilibrage de poids sont sollicitées pneumatiquement à partir des extrémités distales des cylindres pneumatiques (111) respectifs.

8. Portique d'équilibrage de poids selon la revendication 7, comprenant en outre un réservoir sous pression couplé de manière fonctionnelle aux cylindres pneumatiques (111) et dans lequel le portique comprend en outre un mécanisme de contrôle de pression pour contrôler la pression du réservoir sous pression en fonction du poids de l'outil industriel.

9. Portique d'équilibrage de poids selon la revendication 1, dans lequel l'entretoise angulaire (116) comprend une entretoise à gaz et dans lequel une force nominale de l'entretoise à gaz est telle que, lorsque l'outil est en position proximale, l'entretoise à gaz est capable de soulever le bras radial et dans lequel une force nominale de l'entretoise à gaz est telle que, lorsque l'outil est en position distale, l'entretoise à gaz est incapable de maintenir le bras radial en haut.

10. Portique d'équilibrage de poids selon la revendication 9, dans lequel le cylindre pneumatique (111) de l'entretoise angulaire est commandé et dans lequel le cylindre pneumatique est commandé à partir d'un contrôleur accessible au niveau de l'outil industriel.

11. Portique d'équilibrage selon la revendication 1, **caractérisé en ce que** le mécanisme de positionnement (110) comprend deux cylindres hydrauliques agissant en série entre les bras radiaux et le bogie.

12. Portique d'équilibrage de poids selon la revendication 11, dans lequel une tige de piston d'un cylindre proximal du mécanisme de positionnement est reliée au tube de cylindre d'un cylindre distal du mécanisme de positionnement.

13. Procédé de commande du portique d'équilibrage de poids (100) selon la revendication 1, le procédé comprenant la rétraction du mécanisme de positionnement (110) pour positionner l'outil industriel (109) à la position de rangement proximale inférieure et l'extension du mécanisme de positionnement pour positionner l'outil industriel à une position déployée relevée distale.

14. Procédé de commande du portique d'équilibrage de poids selon la revendication 13, comprenant en outre l'utilisation de l'entretoise angulaire pour lever le bras radial pour maintenir l'outil industriel au-dessus d'un obstacle élevé et pour abaisser le bras radial pour maintenir l'outil industriel sous un obstacle en surplomb.

15. Procédé de commande du portique d'équilibrage de poids selon la revendication 14, dans lequel l'entretoise angulaire comprend une entretoise à gaz ayant une force nominale suffisante pour soulever le bras radial lorsque l'outil est à la position proximale et insuffisante pour maintenir le bras radial en haut lorsque l'outil est à la position distale et dans lequel le procédé comprend en outre l'élévation et l'abaissement du bras radial en contrôlant la position du bogie.
